# EUROPÄISCHE PATENTSCHRIFT

(11) **EP 2 059 885 B1**
(45) Veröffentlichungstag und Bekanntmachung des Hinweises auf die Patenterteilung: **24.11.2010**
(21) Anmeldenummer: 06791353.3
(22) Anmeldetag: 05.09.2006
(51) Int. Cl.: G06F 21/00, H04L 9/00, G06K 19/073, G06F 12/14

(54) **Vorrichtung zur Kommunikation mit Hilfe einer kryptischen Codetabelle**
Apparatus for communication using a cryptic code table
Dispositif pour communiquer à l'aide d'un tableau de codage cryptique

(43) Veröffentlichungstag der Anmeldung: 20.05.2009
(73) Patentinhaber: SIEMENS AKTIENGESELLSCHAFT, 80333 München (DE)
(72) Erfinder: BÄR, Thomas, 92260 Fichtenhof (DE); CARLS, Erhard, 92284 Poppenricht/Trasslberg (DE); WIESGICKL, Bernhard, 92249 Vilseck (DE)
(86) Internationale Anmeldenummer: PCT/DE2006/001552
(87) Internationale Veröffentlichungsnummer: WO 2008/028430

(56) Entgegenhaltungen:
- EP-A- 1 478 120
- WO-A-2004/079644
- DEPARTMENT OF COMMERCE U S: "FIPS 140-2: SECURITY REQUIREMENTS FOR CRYPTOGRAPHIC MODULES" INTERNET CITATION, [Online] 25. Mai 2001 (2001-05-25), XP002439510 Gefunden im Internet: URL:http://csrc.nist.gov/publications/fips /fips140-2/fips1402.pdf> [gefunden am 2007-06-27]
- KOMMERLING O ET AL: "Design principles for tamper-resistant smart card processors" USENIX WORKSHOP ON SMARTCARD TECHNOLOGY, 10. Mai 1999 (1999-05-10), Seiten 9-20, XP002322251

## Beschreibung

Die vorliegende Erfindung betrifft eine Kommunikationsprozessorvorrichtung zur Kommunikation in einem Netzwerk, mit einer Prozessoreinheit zum Verarbeiten eingehender Signale und zum Erzeugen und/oder Bereitstellen ausgehender Signale sowie einem Codespeicher zum Bereitstellen eines Codes für die Prozessoreinheit.

Bei Low-Level-Bussen für industrielle Anwendungen kann das sogenannte Aktuator-Sensor-Interface (AS-i) eingesetzt werden. Das Aktuator-Sensor-Interface ist im Internet unter der Adresse "www.as-interface.net" ausführlich beschrieben.

Zur Übertragung von sicherheitsrelevanten Daten über ein AS-Interface ist in jedem Slave eines AS-i-Netzes eine für dieses Netz einmalige Codefolge von typischerweise 4 x 8 Bit gespeichert. Eine detaillierte Beschreibung einer derartigen Codefolge findet sich in dem Kompendium "AS-Interface - Die Lösung in der Automation" AS-i, Februar 2003, Seiten 134 ff.

Die Codefolge ist üblicherweise in einem von einem AS-i-Kommunikationsprozessor getrennten Bauelement hinterlegt. Durch die Trennung von Kommunikationsprozessor und Codespeicher kann eine ungewollte Übertragung der Codesequenz, beispielsweise aufgrund eines Kurzschlusses oder ungenauen Fertigungsprozesses, ausgeschlossen werden. In erster Linie sind sicherheitsrelevante Bauelemente und Leiterbahnen voneinander räumlich zu trennen, um den geforderten Fehlerausschluss gewährleisten zu können. Je nach verwendeten Potentialen und Materialien sind hierbei bestimmte Mindestabstände einzuhalten. Die minimalen Abstände liegen beispielsweise bei 0,2 mm. Aus diesem Grund ist die Hinterlegung des Codes in einem mit dem Kommunikationsprozessor integrierten Codespeicher in der Regel nicht möglich.

Aus EP 1 478 120 A1 ist dennoch eine Kommunikationsprozessoreinheit mit integriertem Codespeicher bekannt. Eine ungewollte Übertragung der Codesequenz wird hierbei dadurch ausgeschlossen, dass nicht der Originalcode, sondern eine verschlüsselte Form desselben in dem Codespeicher hinterlegt wird, so dass im Fehlerfall allenfalls der verschlüsselte Code übertragen werden kann. Zur Entschlüsselung des Codes ist ein externer Decoder vorgesehen, dem der verschlüsselte Code aus dem Codespeicher zugeführt wird, und der den entschlüsselten Code über eine zu überwachende Schaltvorrichtung, insbesondere einen Notausschalter, an den Kommunikationsprozessor zurückführt. Mit der aus EP 1 478 120 A1 bekannten Vorrichtung können aber nur passive Schaltvorrichtungen, wie der genannte Notausschalter, überwacht werden, die dem Decoder und dem Kommunikationsprozessor zwischengeschaltet werden können und so den Datenstrom zwischen dem Decoder und dem Kommunikationsprozessor direkt beeinflussen. Die Vorrichtung ist dagegen nicht zur Überwachung sicherheitsgerichteter Sensoren ausgebildet.

Solche Sensoren sind üblicherweise dazu ausgebildet, in Abhängigkeit eines zu überwachenden Zustands erzeugte Ausgabesignale redundant, insbesondere über zwei parallele und voneinander unabhängige Ausgänge abzugeben. Als Ausgabesignal gibt ein solcher Sensor in einem EIN-Zustand in der Regel eine konstante Spannung aus, z.B. in Höhe von etwa 24V, während in einem AUS-Zustand des Sensors keine Spannung ausgegeben wird. Häufig enthält das oder jedes Ausgabesignal, insbesondere im EIN-Zustand, zudem in regelmäßigen Zeitabständen kurze Testpulse, die die ordnungsgemäße Funktion des Sensors anzeigen.

Aus WO 2004/079644 A (KONINKL PHILIPS ELECTRONICS NV [NL]) (2004-09-16) ist ein drahtloses RFID-Etikett bekannt, das einen dem Datenspeicher und einer Antenne zwischengeschalteten Schaltkreis umfasst. Eine Spannungsversorgung des Schaltkreises kann hierbei durch einen Sensor aktiviert und deaktiviert werden.

Die Aufgabe der vorliegenden Erfindung besteht darin, eine Kommunikationsprozessorvorrichtung der vorstehend beschriebenen Art dazu auszubilden, dass sie auf besonders einfache und effektive Weise zur Überwachung von Sensoren einsetzbar ist.

Erfindungsgemäß wird diese Aufgabe gelöst durch die Merkmale des Anspruchs 1. Danach ist bei einer Kommunikationsprozessorvorrichtung mit einem mit dem Kommunikationsprozessor integrierten Codespeicher, in dem der Code in verschlüsselter Form hinterlegt ist, und mit einem externen Decoder zur Entschlüsselung des Codes, dem externen Decoder als Versorgungsspannung ein Ausgabesignal eines Sensors oder eine aus diesem Ausgabesignal abgeleitete Spannung zugeführt.

Gemäß der ersten Alternative des Anspruchs 1 wird das Ausgabesignal des Sensors direkt zur Spannungsversorgung des Decoders verwendet, sofern der Sensor ein hierfür geeignetes Ausgabesignal erzeugt. Das Ausgabesignal ist insbesondere dann unmittelbar als Versorgungsspannung geeignet, wenn es in einem EIN-Zustand eine konstante, von Null verschiedene Spannung, inbesondere in Höhe von etwa 24V, einnimmt und in einem AUS-Zustand im Wesentlichen spannungslos ist. Sensoren, deren Ausgabesignale diese Charakteristik aufweisen, werden daher im Sinne eines möglichst einfachen konstruktiven Aufbaus der erfindungsgemäßen Vorrichtung bevorzugt eingesetzt.

Die zweite Alternative des Anspruchs 1 beruht auf der Erkenntnis, dass das Ausgabesignal herkömmlicher Sensoren mitunter nicht unmittelbar als Spannungsversorgung für den Decoder verwendbar ist. In diesem Fall ist vorgesehen, das Ausgabesignal zunächst derart zu modifizieren, dass es als Spannungsversorgung für den Decoder geeignet ist, und eine in diesem Modifikationsschritt aus dem Ausgabesignal abgeleitete Spannung dem Sensor als Versorgungsspannung zuzuführen. Die abgeleitete Spannung kann - je nach der konkreten Bauart des Sensors und des Decoders - zu dem ursprünglichen Ausgabesignal insbesondere direkt oder indirekt proportional, verschoben, invertiert, geglättet oder auf sonstige Weise modifiziert sein. In jedem Fall ist das Ausgabesignal aber derart zu modifizieren, dass die abgeleitete Spannung in einem dem EIN-Zustand des Ausgabesignals entsprechenden Zustand den Wert der zum Betrieb des Decoders vorgesehenen Betriebsspannung, z.B. 24V Gleichspannung, einnimmt, und dass die abgeleitete Spannung in einem dem AUS-Zustand des Ausgabesignals entsprechenden Zustand im Wesentlichen den Wert Null hat.

Gemäß beider Alternativen des Anspruchs 1 wird der Sensor im Wesentlichen als Schalter verwendet, durch den der Decoder aktiviert oder deaktiviert werden kann. Der Decoder ist dabei nur solange "eingeschaltet", solange das Ausgabesignal den EIN-Zustand einnimmt, und nur solange wird auch die von dem Decoder entschlüsselte Codesequenz an den Kommunikationsprozessor zurückgeführt. Wenn das Ausgabesignal den AUS-Zustand einnimmt, wird dagegen der Decoder durch Unterbrechung der Betriebsspannung "abgeschaltet", wodurch auch die Rückführung der entschlüsselten Codesequenz an den Kommunikationsprozessor zum Erliegen kommt.

Insgesamt gelingt es durch die Merkmale des Anspruchs 1, die bei der bekannten Kommunikationsprozessorvorrichtung gemäß EP 1 478 120 A1 dem Decoder und dem Kommunikationsprozessor zwischengeschaltete Schaltvorrichtung ohne Verlust an Funktionalität und bei ähnlich einfachem Schaltungsaufbau durch einen Sensor zu ersetzen.

Darüber hinaus genießt die erfindungsgemäße Vorrichtung alle bereits in EP 1 478 120 A1 beschriebenen Vorteile. Insbesondere wird dadurch, dass in der Kommunikationsprozessoreinheit der Code in verschlüsselter Form gespeichert ist, bei einem Fehler in der Kommunikationsprozessoreinheit keine gültige Codesequenz übertragen. Damit ist es auch möglich, dass der Codespeicher in der Kommunikationsprozessoreinheit unter Umgehung der vorschriftsgemäßen räumlichen Trennung von beispielsweise mindestens 0,2 mm zwischen sicherheitsrelevanten Baugruppen innerhalb eines integrierten Schaltkreises integriert werden kann.

Ein derartiger gemeinsamer Schaltkreis für den Kommunikationsprozessor und den Codespeicher ist zweckmäßigerweise als ASIC ausgestaltet.

Vorzugsweise wird in dem Codespeicher auch Verschlüsselungsinformation beziehungsweise Entschlüsselungsinformation abgespeichert, die dem Decoder zur Verfügung gestellt wird. Damit kann der externe Decoder einfacher gestaltet werden, da die Entschlüsselungsinformation nicht in dem Decoder abgelegt zu sein braucht.

Der Codespeicher kann eine Eingabeeinrichtung zur Eingabe eines verschlüsselten Codes aufweisen. Dadurch kann der Code in die Kommunikationsprozessorvorrichtung beliebig beispielsweise mit Hilfe eines PC eingespeichert und geändert werden.

Die Kommunikationsprozessorvorrichtung kann außerdem eine Tauscheinrichtung besitzen, mit der zumindest zwei Stellen des mehrstelligen Codes vertauschbar sind. Der Tausch dient zur teilweisen Entschlüsselung des verschlüsselten Codes. Generell bedeutet dies, dass zumindest ein Teil der Entschlüsselung direkt in der Kommunikationsprozessorvorrichtung vorgenommen werden kann.

Vorteilhafterweise wird die Kommunikationsprozessorvorrichtung für ein Aktuator-Sensor-Interface zur Kommunikation in einem AS-i-Netz eingesetzt.

Bei Verwendung eines sicherheitsgerichteten Sensors, der mehrere redundante Ausgabesignale erzeugt, wird bevorzugt jedes Ausgabesignal einem unabhängigen Schaltungsteil des Decoders als Spannungsversorgung zugeführt. Der Decoder hat bevorzugt mehrere solcher Schaltungsteile, die insbesondere der Entschlüsselung jeweils einer Stelle, d.h. eines Bit-Signals des aus dem Codespeicher zugeführten verschlüsselten Codes dienen. Diese Ausführung ermöglicht vorteilhafterweise die Erkennung eines Redundanzfehlers der Ausgabesignale durch den Kommunikationsprozessor. Ein solcher Redundanzfehler, infolge dessen die Ausgabesignale zum selben Zeitpunkt nicht denselben Zustand einnehmen, äußert sich hierbei nämlich in einem Teilausfall des Decoders, der wiederum eine fehlerhafte Entschlüsselung des Codes zur Folge hat.

Um einen ungestörten Betrieb der Vorrichtung sicherzustellen, ist bei einem Sensor, dessen Ausgabesignal bzw. Ausgabesignale Testpulse aufweisen, dem Sensor und dem Decoder zweckmäßigerweise eine Testunterdrückungseinrichtung zwischengeschaltet, die diese Testpulse in dem oder jedem Ausgabesignal unterdrückt.

Nachfolgend werden Ausführungsbeispiele der vorliegenden Erfindung anhand einer Zeichnung näher erläutert. Darin zeigen:
- FIG 1: in einen schematisch vereinfachten Blockschaltbild eine Kommunikationsprozessorvorrichtung, umfassend eine Kommunikationsprozessoreinheit mit integriertem Codespeicher sowie einen externen Decoder in einer ersten Ausführungsform,
- FIG 2: Codetabellen, die die Verarbeitung des Codes durch die erste Ausführungsform der Kommunikationsprozes- sorvorrichtung darstellen,
- FIG 3: Codetabellen, die die Verarbeitung des Codes durch eine zweite Ausführungsform der Kommunikationsprozes- sorvorrichtung darstellen,
- FIG 4: einen schematisch vereinfachten Schaltungsaufbau der zweiten Ausführungsform der Kommunikationsprozessor- vorrichtung, und
- FIG 5: einen Schaltplan eines Schaltungsteils des Decoders der zweiten Ausführungsform.

Einander entsprechende Teile sind in allen Figuren stets mit gleichen Bezugszeichen versehen.

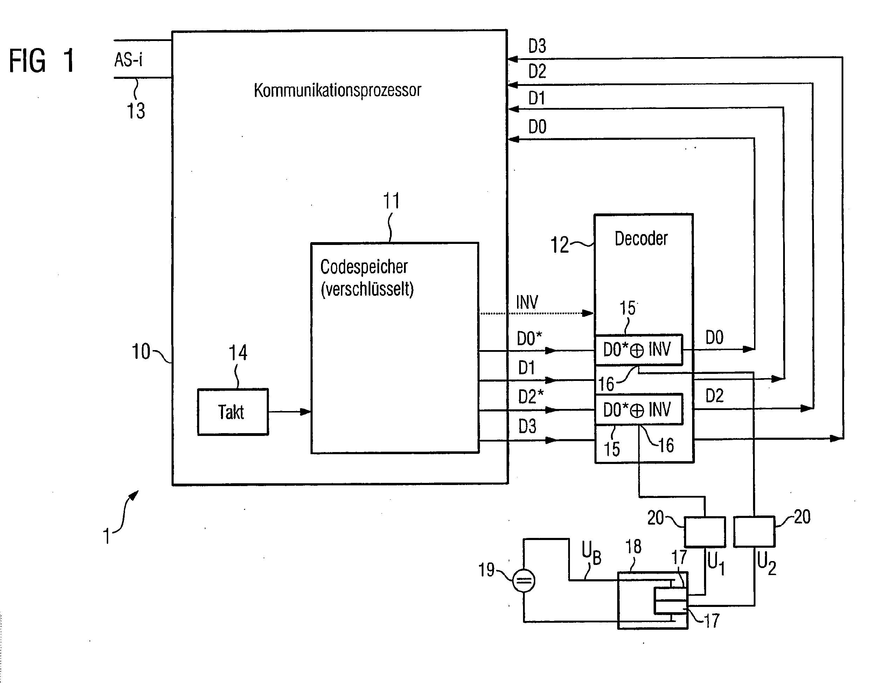

Die in FIG 1 dargestellte (Kommunikationsprozessor-)Vorrichtung 1 umfasst eine (Kommunikations-)Prozessoreinheit 10, d.h eine Baugruppe oder einen Schaltkreis, insbesondere ASIC, mit einem hier nicht explizit dargestellten Kommunikationsprozessor. Die Prozessoreinheit 10 umfasst einen integriertem Codespeicher 11. Die Vorrichtung 1 umfasst weiter einen extern bezüglich der Prozessoreinheit 10 angeordneten Decoder 12. Die Prozessoreinheit 10 sendet und empfängt Daten von einer AS-i-Leitung 13. Die Information über den für das AS-Interface spezifischen Code ist in dem Codespeicher 11 abgelegt. Der Codespeicher 11 erhält von einen ebenfalls in der Prozessoreinheit 10 integrierten Taktgeber 14 die notwendigen Taktimpulse.

Damit die geforderte Sicherheit gegeben ist, ist in dem Codespeicher 11 der Code verschlüsselt gespeichert. Darüber hinaus ist in dem Codespeicher 11 auch Entschlüsselungsinformation INV gespeichert. Der verschlüsselte Code wird dem Decoder 12 aus dem Codespeicher 11 jeweils in Achtelsequenzen bzw. Telegrammen mit vier Stellen DO*, D1, D2* oder D3 (entsprechend jeweils einer Bit-Information) zugeführt, wobei jeder Stelle D0*, D1, D2* oder D3 eine Datenleitung zugeordnet ist. Die Entschlüsselungsinformation INV wird parallel hierzu über eine weitere Datenleitung an den Decoder 12 übertragen. Durch die Sterne in der Bezeichnung der Stellen D0* und D2* wird symbolisiert, dass der Code an diesen Stellen DO* und D2* bzw. in den zugehörigen Leitungen verschlüsselt übertragen wird. Durch eine spezifische Decodier-Operation werden die Stellen D0* und D2* zu D0 und D2 entschlüsselt. Im vorliegenden Beispiel erfolgt die Decodier-Operation mittels eines der jeweiligen Stelle D0* und D2* zugeordneten Schaltungsteils 15 des Decoders 12 durch eine Exclusiv-Oder(XOR)-Verknüpfung der verschlüsselten Stelle D0*, D2* mit der Entschlüsselungsinformation INV. Jedes der Schaltungsteile 15 ist hierzu insbesondere in Form eines logischen elektronischen Bauteils, eines sogenannten XOR-Gatters, ausgeführt.

Über Ausgangsleitungen des Decoders 12 werden nun sämtliche decodierten Stellen D0 und D2 zusammen mit den von Haus aus uncodierten Stellen D1 und D3 an die Prozessoreinheit 10 zurückgeleitet.

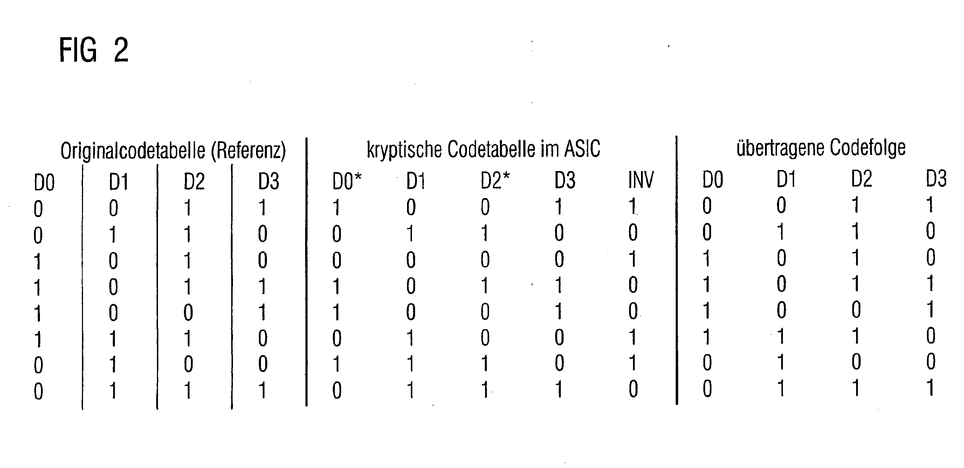

In FIG 2 sind in einem Beispiel die Codes dargestellt, die in der Schaltung von FIG 1 verarbeitet beziehungsweise erstellt werden. Auf der linken Seite ist diejenige 4 x 8-Codefolge dargestellt, die den AS-Interface-spezifischen Code im Original darstellt. In der Mitte von FIG 2 ist die verschlüsselte 4 x 8-Codefolge einschließlich der Entschlüsselungsinformation INV für jedes der acht Telegramme dargestellt, wie sie im Codespeicher 11 hinterlegt ist. Auf der rechten Seite von FIG 2 ist schließlich der Code wiedergegeben, wie er von dem Decoder 12 ausgegeben und in die Prozessoreinheit 10 eingespeist wird. Die übertragene Codefolge entspricht exakt der auf der linken Seite dargestellten Originalcodefolge.

Das Regelwerk für die in der Mitte von FIG 2 dargestellte kryptische Codetabelle, die in der Prozessoreinheit 10 abgespeichert ist, lautet wie folgt:
D0* = DO ⊕ INV und ebenso
D2* = D2 ⊕ INV.

Dabei symbolisiert das "⊕" eine Exklusiv-Oder-Verknüpfung. Die Verschlüsselungs- beziehungsweise Entschlüsselungsinformation INV besteht aus einem Bit, das fest oder variabel bei den n-Codewerten mit 0 oder 1 belegt ist. Im vorliegenden Fall ist INV beim ersten, dritten, sechsten und siebten Codewert mit 1 belegt, bei den anderen Codewerten mit 0. Die INV-Information wird dem Codewert zugeordnet im Codespeicher 11 mit abgespeichert. Die Stellen D0 und D3 der im Codespeicher 11 abgespeicherten Codetabelle sind unverändert und entsprechen dem Originalcode.

Die Rückgewinnung des zu übertragenden Originalcodes aus dem in der Prozessoreinheit 10 gespeicherten kryptischen Code (vergleiche FIG 2 Mitte) geschieht wie folgt:
Die INV-Information wird an einem ASIC-pin der Prozessoreinheit 10 ausgegeben. In dem externen Decoder 12 wird D0 = D0* ⊕ INV und D2 = D2* ⊕ INV gebildet und übertragen. D1 und D3 werden durch den Decoder 12 durchgeleitet und übertragen.

Vergleicht man die kryptische Codetabelle mit der letztendlich übertragenen und von einem Sicherheitsmonitor erwarteten Codefolge, ist leicht erkennbar, dass durch interne Fehler der Prozessoreinheit 10 keine ungewollte Übertragung der gültigen Codetabelle stattfinden kann.

Wie aus FIG 1 weiterhin erkennbar ist, ist an einen Betriebsspannungseingang 16 jedes Schaltungsteils 15 des Decoders 12 ein Signalausgang 17 eines Sensors 18 angeschlossen. Der Sensor 18 ist ein sicherheitsgerichteter Sensor, der in Abhängigkeit eines zu überwachenden Zustands über die Signalausgänge 17 redundante Ausgabesignale U1, U2 abgibt. Jedes Ausgabesignal U1, U2 nimmt in einem EIN-Zustand eine im Wesentlichen konstante Spannung von etwa 24V ein, und ist in einem AUS-Zustand im Wesentlichen spannungslos. Der Sensor 18 wird seinerseits durch eine Gleichstromquelle 19 mit einer konstanten Betriebsspannung U_{B} von vorzugsweise wiederum 24V versorgt. Der Decoder 12 wird somit über den Sensor 18 mit der zum Betrieb des selben nötigen Betriebsspannung versorgt. Jeder Signalausgang 17 des Sensors 18 hat dabei im Wesentlichen die Funktion eines Schalters, der in Abhängigkeit des zu überwachenden Zustands im EIN-Zustand die von der Gleichspannungsquelle 19 zur Verfügung gestellte Betriebsspannung U_{B} an den Betriebsspannungseingang 16 des zugehörigen Schaltungsteils 15 des Decoders 12 übermittelt oder im AUS-Zustand die Spannungsversorgung des Schaltungsteils 15 unterbricht.

Entsprechend erfolgt die durch den Decoder 12 vorgenommene Entschlüsselung des Codes nur im EIN-Zustand, während der Decoder 12 im AUS-Zustand des Sensors 18 abgeschaltet ist, und daher zumindest auf den Stellen D0 und D2 ein Null-Signal ausgibt. Optional ist der Decoder 12 derart ausgebildet, dass auch die uncodierten Stellen D1 und D3 nur im EIN-Zustand des Sensors 18 unverändert an die Prozessoreinheit 10 zurückgegeben werden, und dass der Decoder 12 im AUS-Zustand auch auf diesen Stellen D1, D3 ein Null-Signal ausgibt. Die Prozessoreinheit 10 empfängt in diesem Fall im AUS-Zustand auf allen Stellen D0 bis D3 ein Null-Signal. Dies entspricht dem Notaus-Zustand der AS-i-Spezifikation.

Ein Redundanzfehler der Ausgangssignale U1, U2, bei dem - z.B. aufgrund eines Defekts des Sensors 18, eines Leitungsbruchs, etc. - die Ausgangssignale U1, U2 zum gleichen Zeitpunkt nicht den selben Zustand aufweisen, führt Vorrichtung 1 dazu, dass nur einer der Schaltungsteile 15 mit der Betriebsspannung versorgt wird, und hierdurch der an die Prozessoreinheit 10 zurückgeführte Code nur teilweise entschlüsselt wird, auf mindestens einer der Stellen D0 bis D3 aber ein Null-Signal enthält. Der Kommunikationsprozessor ist derart ausgebildet, dass er anhand dieser Fehlercharakteristik einen Redundanzfehler erkennt und entsprechende Sicherungsmaßnahmen einleitet.

Die im EIN-Zustand von den Signalausgängen 17 des Sensors 18 ausgegebene konstante Spannung wird in regelmäßigen Zeitabständen durch kurze Testpulse unterbrochen, die die ordnungsgemäße Funktion des Sensors 18 anzeigen. Damit diese Testpulse nicht zu einer Störung der Codeentschlüsselung, und infolgedessen zu einer ungewollten Alarmierung des Kommunikationsprozessors führen, ist jedem Signalausgang 17 und dem Zugehörigen Schaltungsteil 15 des Decoders 12 eine Testunterdrückungseinrichtung 20 zwischengeschaltet, die diese Testpulse in dem jeweiligen Ausgangssignal U1, U2 unterdrückt. Die Testunterdrückungseinrichtung 20 ist im einfachsten Fall als Spannungsglättungsschaltung ausgeführt.

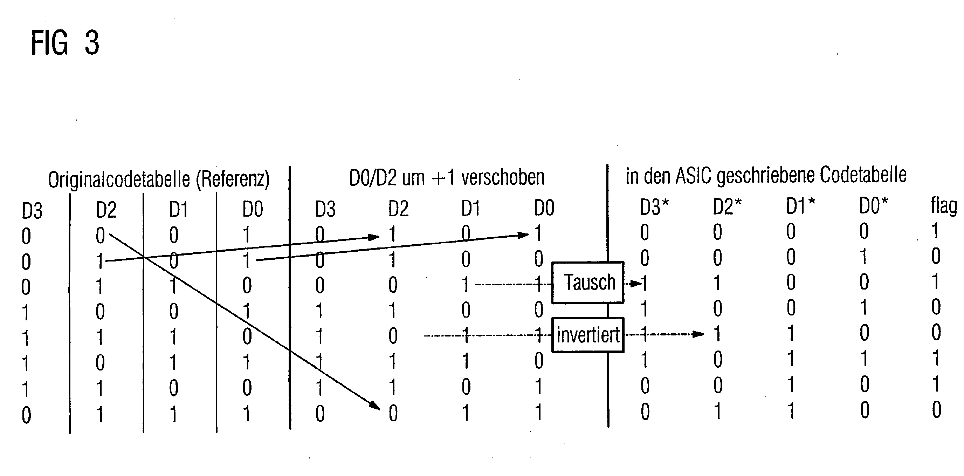

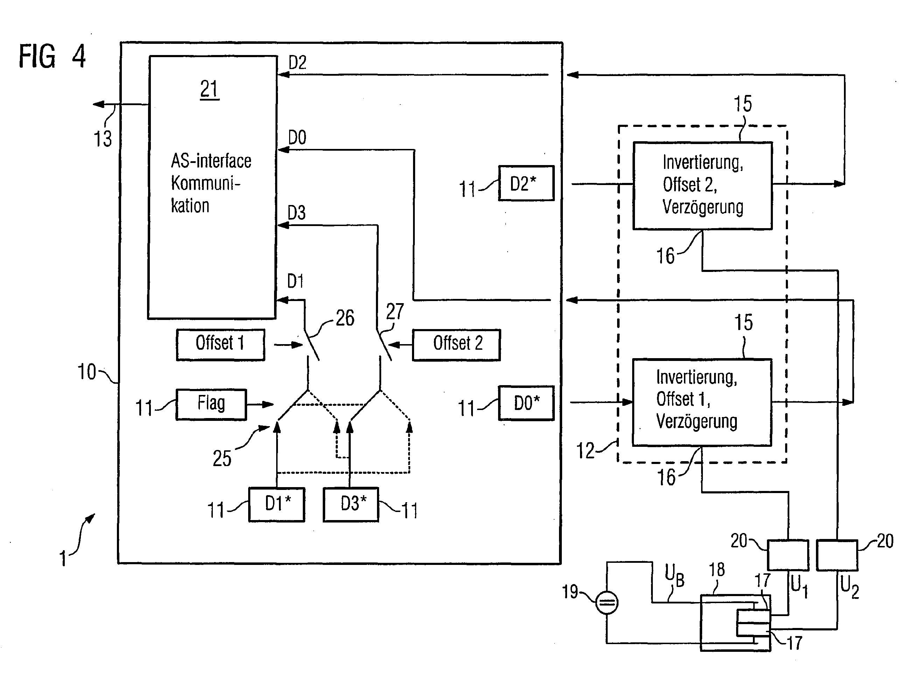

Anhand der FIG 3 und 4 wird eine alternative Ausführungsform der Kommunikationsprozessorvorrichtung 1 vorgestellt. Auf der linken Seite von FIG 3 ist wiederum die Originalcodetabelle als Referenz dargestellt. In einem ersten Verschlüsselungsschritt werden die Werte der Codetabelle an den Stellen D0 und D2 um + 1, d. h. nach oben, verschoben. Diese Verschiebung ist in FIG 2 in der mittleren Tabelle dargestellt. In einem zweiten Verschlüsselungsschritt werden Werte der Tabelle getauscht beziehungsweise invertiert, wie dies in der rechten Tabelle in FIG 3 dargestellt ist. Diese resultierenden Werte werden in den Codespeicher 11 geschrieben. Zusätzlich wird in dem Codespeicher 11 zu jedem vierstelligen Codetelegramm ein Flag abgespeichert.

Das Regelwerk für die kryptographische Codetabelle gemäß FIG 3 lautet:
D0 und D2 werden vor dem Speichern in dem ASIC um einen Wert "nach vorne" verschoben und invertiert. Beim ersten, dritten, sechsten und siebten Codewert (fest oder auch variabel bei insgesamt vier Codewerten) werden D1 und D3 vertauscht. Diese Codewerte werden für ein fünftes Bit (Flag) mit 1 gekennzeichnet. Die Codewerte mit nicht vertauschtem D1/D3-Bit sind mit Flag = 0 gekennzeichnet. Die Flag-Information wird dem Codewert zugeordnet, gespeichert.

Die Rückgewinnung des Originalcodes aus dem kryptischen Code erfolgt mittels der in FIG 4 dargestellten Schaltung. In dieser Ausführungsform umfasst die Kommunikationsprozessorvorrichtung 1 wiederum die Prozessoreinheit 10 mit integriertem Codespeicher 11 (der in FIG 4 lediglich aus darstellungstechnischen Gründen abweichend von FIG 1 in Form mehrerer separater Speicherplätze abgebildet ist) sowie den externen Decoder 12 mit zwei Schaltungsteilen 15. Abweichend von der Darstellung gemäß FIG 1 ist in FIG 4 der Kommunikationsprozessor unter dem Bezugszeichen 21 explizit dargestellt.

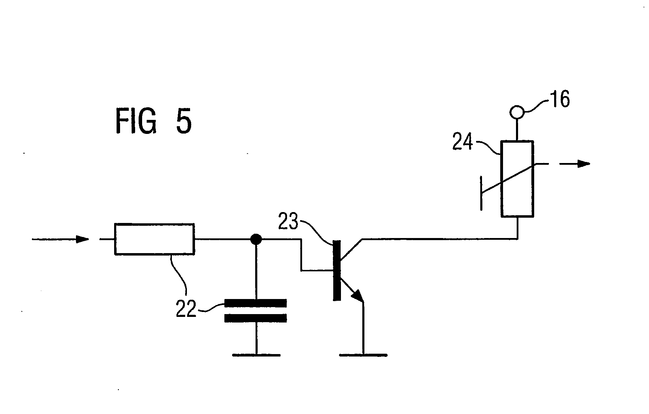

In den Schaltungsteilen 15 des Decoders 12 werden die Werte D0* und D2*, die aus der Kommunikationsprozessoreinheit 10 stammen, invertiert, mit einer Offsetspannung Offset 1 beziehungsweise Offset 2 versehen und so verzögert (ca. 20 µs), dass D0* und D2* erst im nächsten AS-Interface-Zyklus übertragen werden. Die entschlüsselten Werte D0 und D2 werden von dem Decoder 12 an die Kommunikationsprozessoreinheit 10 beziehungsweise den darin enthaltenen Kommunikationsprozessor 21 zurückgeführt. Die Schaltungsteile 15 umfassen gemäß FIG 5 zur Verzögerung jeweils ein RC-Glied 22, zur Invertierung einen damit verbundenen Transistor 23 und zur Offseteinstellung einen Spannungsteiler 24.

Die Werte D1 und D3 werden in der wiederum als ASIC realisierten Kommunikationsprozessoreinheit 10 intern in Abhängigkeit der Offsetspannungen Offset 1 und Offset 2, die bei Anliegen von D0* und D2* anstehen, zur Übertragung zu dem Kommunikationsprozessor 21 durchgeschaltet. Hierzu werden die Werte D1* und D3* mit einer internen Tauscheinrichtung 25, der nach Art eines Kreuzschalters ausgebildet ist, entsprechend einem Flag vertauscht. Falls das Flag (vergleiche rechte Tabelle von FIG 4) den Wert Null hat, werden die Werte D1* und D3* nicht vertauscht und unmittelbar als D1 und D3 an den Kommunikationsprozessor 21 über Schalter 26 und 27 weitergeleitet.

Diese internen Schalter 26 und 27 werden über die Offsetspannungen Offset 1 und Offset 2 gesteuert. Hierzu besteht ein (nicht explizit dargestellter) Abgriff zu den Leitungen der Stellen D0 und D2. Solange die Schaltungsteile 15 des Decoders 12 über den Sensor 18 spannungsversorgt sind, sind die von dem Decoder 12 ausgegebenen Stellen D0 und D2 mit den Offsetspannungen Offset1 bzw. Offset2 versehen. Diese Offsetspannungen werden dazu verwendet, die internen Schalter 26 und 27 geschlossen zu halten.

Wenn die vom Sensor 18 ausgegebenen Ausgabesignale U1, U2 dagegen den AUS-Zustand einnehmen, und infolgedessen die Spannungsversorgung für die Schaltungsteile 15 des Decoders 12 zusammenbricht, liegen die Offsetspannungen Offset1 und Offset2 nicht länger an den internen Schaltern 26 und 27 an, so dass auch diese öffnen. Dadurch liegt an sämtlichen Leitungen D0 bis D3 ein Null-Signal an, das dem Notaus-Zustand der ASi-Spezifikation entspricht.

Grundsätzlich sind auch beliebige andere Codetabellen und Codefolgen einsetzbar. Auch bei der zweiten Ausführungsform der Vorrichtung 1 ergeben sich die im Zusammenhang mit den FIG 2 und 3 genannten Vorteile.

## Patentansprüche

1. Kommunikationsprozessorvorrichtung (1) zur Kommunikation in einem Netzwerk mit einer Prozessoreinheit (10) zum Verarbeiten eingehender Signale und zum Erzeugen und/oder Bereitstellen ausgehender Signale und einem Codespeicher (11) zum Bereitstellen eines Codes für die Prozessoreinheit (10),
- wobei der Codespeicher (11) in die Prozessoreinheit (10) integriert ist,
- wobei der Code in dem Codespeicher (11) verschlüsselt vorliegt und
- wobei die Prozessoreinheit (10) zur Entschlüsselung zumindest eines Teils des Codes an einen externen Decoder (12) anschließbar ist,
**dadurch gekennzeichnet, dass** dem Decoder (10) als Versorgungsspannung ein Ausgabesignal (U1,U2) eines Sensors (18) oder eine aus diesem Ausgabesignal (U1,U2) abgeleitete Spannung zugeführt ist.

2. Kommunikationsprozessorvorrichtung (1) nach Anspruch 1, **dadurch gekennzeichnet, dass** der Sensor (18) mindestens zwei redundante Ausgabesignale (U1,U2) abgibt, wobei jedes Ausgabesignal (U1,U2) oder eine aus diesem abgeleitete Spannung einem zugehörigen Schaltungsteil (15) des Decoders (12) zugeführt ist.

3. Kommunikationsprozessorvorrichtung (1) nach Anspruch 1 oder 2, dass dem Sensor (18) und dem Decoder (12) mindestens eine Testunterdrückungseinheit (20) zwischengeschaltet ist, die zur Unterdrückung von Testpulsen in dem oder jeden Ausgangssignal (U1,U2) ausgebildet ist.

4. Kommunikationsprozessoreinrichtung (1) nach einem der Ansprüche 1 bis 3, **dadurch gekennzeichnet, dass** die Prozessoreinheit (10) und der Codespeicher (11) in einem gemeinsamen integrierten Schaltkreis realisiert sind.

5. Kommunikationsprozessorvorrichtung (1) nach Anspruch 4, **dadurch gekennzeichnet, dass** der gemeinsame Schaltkreis ein ASIC ist.

6. Kommunikationsprozessorvorrichtung (1) nach einem der Ansprüche 1 bis 5, **dadurch gekennzeichnet, dass** in dem Codespeicher (11) auch Entschlüsselungsinformation (INV) abgespeichert ist, die dem Decoder (12) zur Verfügung stellbar ist.

7. Kommunikationsprozessorvorrichtung (1) nach einem der Ansprüche 1 bis 6, **dadurch gekennzeichnet, dass** der Codespeicher (11) eine Eingabeeinrichtung zur Eingabe eines verschlüsselten Codes aufweist.

8. Kommunikationsprozessorvorrichtung (1) nach einem der Ansprüche 1 bis 7, die eine Tauscheinrichtung (25) zum Tauschen von mindestens zwei Stellen des mehrstelligen Codes zum Zweck der Entschlüsselung aufweist.

9. Kommunikationsprozessorvorrichtung (1) nach einem der Ansprüche 1 bis 8, **dadurch gekennzeichnet, dass** das oder jedes Ausgangssignal (U1,U2) in einem EIN-Zustand einen vorgegebenen, von Null verschiedenen Spannungswert, insbesondere 24 V, einnimmt und in einem AUS-Zustand im Wesentlichen spannungslos ist.

10. Aktuator-Sensor-Interface mit einer Kommunikationsprozessorvorrichtung (1) nach einem der Ansprüche 1 bis 9.

## Claims

1. Communication processor apparatus (1) for communication in a network with a processor unit (10) for processing incoming signals and for producing and/or providing outgoing signals and with a code memory (11) for providing a code for the processor unit (10),
- wherein the code memory (11) is integrated in the processor unit (10),
- wherein the code in the code memory (11) is available in encrypted form, and
- wherein the processor unit (10) can be connected to an external decoder (12) for the purpose of decrypting at least one portion of the code,
**characterized in that** the decoder (10) is supplied with an output signal (U1, U2) from a sensor (18) or with a voltage derived from this output signal (U1, U2) as a supply voltage.

2. Communication processor apparatus (1) according to Claim 1, **characterized in that** the sensor (18) outputs at least two redundant output signals (U1, U2), wherein each output signal (U1, U2) or a voltage derived therefrom is supplied to an associated circuit part (15) of the decoder (12).

3. Communication processor apparatus (1) according to Claim 1 or 2, **characterized in that** the sensor (18) and the decoder (12) have at least one test suppression unit (20) connected between them which is designed to suppress test pulses in the or each output signal (U1, U2).

4. Communication processor apparatus (1) according to one of Claims 1 to 3, **characterized in that** the processor unit (10) and the code memory (11) are implemented in a common integrated circuit.

5. Communication processor apparatus (1) according to Claim 4, **characterized in that** the common circuit is an ASIC.

6. Communication processor apparatus (1) according to one of Claims 1 to 5, **characterized in that** the code memory (11) also stores decryption information (INV) which can be made available to the decoder (12).

7. Communication processor apparatus (1) according to one of Claims 1 to 6, **characterized in that** the code memory (11) has an input device for the input of an encrypted code.

8. Communication processor apparatus (1) according to one of Claims 1 to 7, which has an interchange device (25) for interchanging at least two digits of the multi-digit code for the purpose of decryption.

9. Communication processor apparatus (1) according to one of Claims 1 to 8, **characterized in that** the or each output signal (U1, U2) adopts a prescribed voltage value different from zero, particularly 24 V, in an ON state and is essentially at zero voltage in an OFF state.

10. Actuator/sensor interface having a communication processor apparatus (1) according to one of Claims 1 to 9.

## Revendications

1. Dispositif ( 1 ) à processeur de communication, pour communiquer dans un réseau comprenant une unité ( 10 ) de processeur, pour le traitement de signaux entrants et pour la production et/ou la mise à disposition de signaux sortants, et une mémoire ( 11 ) de code, pour la mise à disposition d'un code pour l'unité ( 10 ) de processeur,
- dans lequel la mémoire ( 11 ) de code est intégrée dans l'unité ( 10 ) de processeur,
- dans lequel le code est présent de manière chiffrée dans la mémoire ( 11 ) de code, et
- dans lequel l'unité ( 10 ) de processeur peut, pour le déchiffrement d'au moins une partie du code, être raccordée à un décodeur ( 12 ) extérieur,
**caractérisé en ce qu'**un signal ( U1, U2 ) de sortie d'un capteur ( 18 ) ou une tension dérivée de ce signal ( U1, U2 ) de sortie est envoyé au décodeur ( 10 ) comme tension d'alimentation.

2. Dispositif ( 1 ) à processeur de communication suivant la revendication 1,
**caractérisé en ce que** le capteur ( 18 ) émet au moins deux signaux ( U1, U2 ) de sortie redondants, chaque signal ( U1, U2 ) de sortie ou une tension en dérivant étant envoyé à une partie ( 15 ) associée de circuit du décodeur ( 12 ).

3. Dispositif ( 1 ) à processeur de communication suivant la revendication 1 ou 2,
**caractérisé en ce qu'**entre le capteur ( 18 ) et le décodeur ( 12 ) est montée au moins une unité ( 20 ) de suppression de test, qui est constituée pour supprimer des impulsions de test dans le signal ( U1, U2 ) de sortie ou dans chaque signal ( U1, U2 ) de sortie.

4. Dispositif ( 1 ) à processeur de communication suivant l'une des revendications 1 à 3,
**caractérisé en ce que** l'unité ( 10 ) de processeur et la mémoire ( 11 ) de code sont réalisées dans un circuit intégré commun.

5. Dispositif ( 1 ) à processeur de communication suivant la revendication 4,
**caractérisé en ce que** le circuit commun est un ASIC.

6. Dispositif ( 1 ) à processeur de communication suivant l'une des revendications 1 à 5,
**caractérisé en ce que**
une information ( INV ) de déchiffrement, qui peut être mise à disposition du décodeur ( 12 ), est mémorisée aussi dans la mémoire ( 11 ) de code.

7. Dispositif ( 1 ) à processeur de communication suivant l'une des revendications 1 à 6,
**caractérisé en ce que** la mémoire ( 11 ) de code comporte un dispositif d'entrée d'un code chiffré.

8. Dispositif ( 1 ) à processeur de communication suivant l'une des revendications 1 à 7,
**caractérisé en ce qu'**il comporte un dispositif ( 25 ) de remplacement, pour remplacer au moins deux positions du code à plusieurs positions en vue du déchiffrement.

9. Dispositif ( 1 ) à processeur de communication suivant l'une des revendications 1 à 8,
**caractérisé en ce que**
le signal ( U1, U2 ) de sortie ou chaque signal ( U1, U2 ) de sortie prend dans un état fermé, une valeur de tension prescrite différente de 0, notamment de 24 V, et est sensiblement sans tension dans un état ouvert.

10. Interface actionneur-capteur ayant un dispositif ( 1 ) à processeur de communication suivant l'une des revendications 1 à 9.
